# EUROPEAN PATENT SPECIFICATION

(11) **EP 1 990 606 B1**
(45) Date of publication and mention of the grant of the patent: **25.01.2012**
(21) Application number: 07714902.9
(22) Date of filing: 26.02.2007
(51) Int. Cl.: G01C 3/06, B60R 1/00, B60R 21/00, G03B 17/56, G03B 35/08

(54) **STEREO CAMERA**
STEREOKAMERA
APPAREIL DE PHOTO STEREO

(30) Priority: 27.02.2006 JP 2006049673
(43) Date of publication of application: 12.11.2008
(73) Proprietor: Panasonic Corporation, Kadoma-shi Osaka 571-8501 (JP)
(72) Inventor: UCHIYAMA, Hiroo c/o Panasonic Corporation, 2-1-61,Shiromi, Chuo-ku,Osaka-shi,Osaka,540-6207 (JP); INAGAKI,Tatsuhiko c/o Panasonic Corporation, 2-1-61,Shiromi, Chuo-ku,Osaka-shi,Osaka,540-6207 (JP); MATSUSHIMA,Yukihiro c/o Panasonic Corporation, 2-1-61,Shiromi, Chuo-ku,Osaka-shi,Osaka,540-6207 (JP)
(74) Representative: Pautex Schneider, Nicole Véronique
(86) International application number: PCT/JP2007/053470
(87) International publication number: WO 2007/097444

(56) References cited:
- EP-A1- 1 086 859
- EP-A2- 1 623 876
- JP-A- 11 301 365
- JP-A- 2003 335 180
- JP-A- 2004 032 793

## Description

### TECHNICAL FIELD

The invention relates to a stereo camera which estimates a distance to a preceding object while processing an azimuth difference of the two images taken by right and left cameras.

### BACKGROUND ART

There is known a stereo camera which estimates a distance from a vehicle to a preceding object while processing the azimuth difference of the two images taken by the right and left cameras that are arranged in the front portion of the vehicle with the optical axes set apart at a predetermined distance (base length). This stereo camera is mounted on a vehicle as a distance measuring system for measuring a distance to a target and used as a collision avoidance system for warning of a distance between two vehicles and warning of an obstacle.

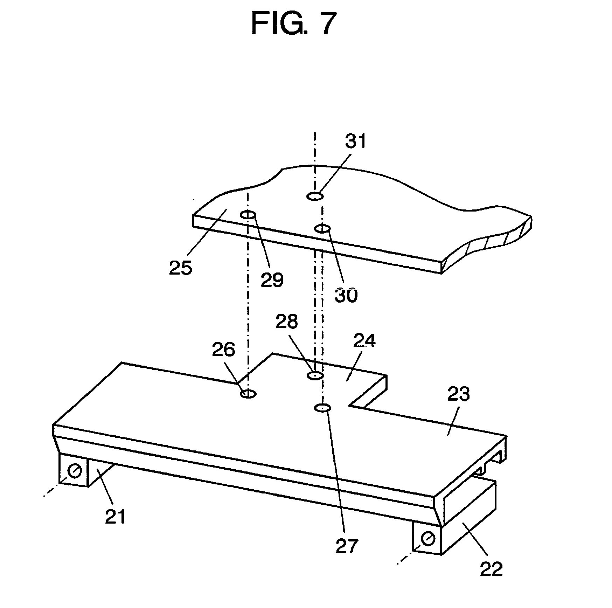

Fig. 7 is a perspective view of the conventional stereo camera. In Fig. 7, the conventional stereo camera has right camera 21, left camera 22, camera stay 23 which holds right camera 21 and left camera 22 at predetermined positions, and attachment portion 24 for fixing camera stay 23 to attached body portion 25. The stereo camera is fixed to attached body portion 25 by means of three screws through openings 26, 27, and 28 bored in the attachment portion 24.

Generally, an error of a measured distance depends on the accurate disposition of two cameras on the both sides of a stereo camera. When the position of the two cameras changes or the optical axis of the camera is deviated from a predetermined position, there occurs an error of a measured distance, which deteriorates reliability in a collision avoidance system (for example, refer to Patent Document 1).

Attached body portion 25 of a vehicle with the stereo camera mounted is easy to rise in temperature because of receiving direct sunlight, for example, during parking. Since the conventional stereo camera is fixed to a vehicle with two screws on the side close to camera stay 23, the portion fixed to the attached body portion by openings 26 and 27 bored in attachment portion 24 is restrained by the interval of opening 29 and opening 30 of attached body portion 25. Since camera stay 23 is not directly fixed to a car body and it spontaneously expands, a difference of expansion between attachment portion 24 and camera stay 23 integrally formed causes a deformation of the portion of camera stay 23 and a deviation of the base length and the optical axis in the right and left cameras, which deteriorates distance measurement accuracy.

Patent Document 1: Japanese Patent Unexamined Publication No. 2001-88623

Moreover, EP 1 086 859 A1 discloses the technical features of the preamble of independent claim 1.

### SUMMARY OF THE INVENTION

The object of this invention is to provide a stereo camera capable of keeping measurement accuracy while preventing deviation in the base length and the optical axis of a camera under a sever environment. This object is achieved by a stereo camera exhibiting the features characterised in independent claim 1.

The stereo camera according to the invention has: a right camera and a left camera, a camera stay which holds the right camera and the left camera at predetermined positions, and an attachment portion having openings for fixing the camera stay to a vehicle, in which the respective centers of the openings are positioned at a plurality of virtual lines parallel to a base line connecting the right camera and the left camera, a plurality of the openings are arranged on a virtual parallel line far from the camera stay, and one opening is arranged on a virtual parallel line closer to the camera stay than the faraway virtual parallel line.

According to this structure, it is possible to prevent from deformation of the camera stay owing to a difference of expansion between the attachment portion and the camera stay and deviation in the base length and the optical axis of the both cameras, thereby keeping measurement accuracy.

In the stereo camera of the invention, the number of the plural openings is two, which forms an isosceles triangle with the one opening, and the center of the one opening is positioned at an apex of the isosceles triangle having two sides of equal length.

According to this structure, it is possible to prevent from rotation of the camera stay and deviation in the base length and the optical axis of the both cameras, thereby keeping measurement accuracy.

In the stereo camera of the invention, the center of the one opening is positioned in the middle of the base length connecting the right camera and the left camera.

According to this structure, it is possible to keep the both cameras evenly, thereby assuring stability against vibration and shock during running time.

In the stereo camera of the invention, the camera stay and the attachment portion are integrally formed.

According to this structure, it is possible to prevent from an attachment error at an assembly time and improve attachment accuracy.

### BRIEF DESCRIPTION OF THE DRAWINGS

Fig. 1 is a perspective view of a stereo camera according to an embodiment of the invention.
Fig. 2 is a view showing the state of attaching the stereo camera according to an embodiment of the invention to a car body.
Fig. 3 is a view showing the attachment portion of the stereo camera according to the embodiment of the invention.
Fig. 4 is a view showing the angle displacement amount of the right and left cameras in the case of using the stereo camera according to the embodiment of the invention.
Fig. 5 is a view showing the attachment portion of a stereo camera of a comparison example.
Fig. 6 is a view showing the angle displacement amount of the right and left cameras in the case of using the stereo camera of the comparison example.
Fig. 7 is a perspective view of the conventional stereo camera.

### REFERENCE MARKS IN THE DRAWINGS

1 right camera
2 left camera
3 camera stay
4, 14 attachment portion
5 6, 7, 15, 16, 17, 18 opening
8, 9, 10 screw
11 attached car body portion
12, 13, 14 opening on the side of car body

### DETAILED DESCRIPTION OF THE PREFERRED EMBODIMENTS

Hereinafter, a stereo camera according to an embodiment of the invention will be described using the drawings.

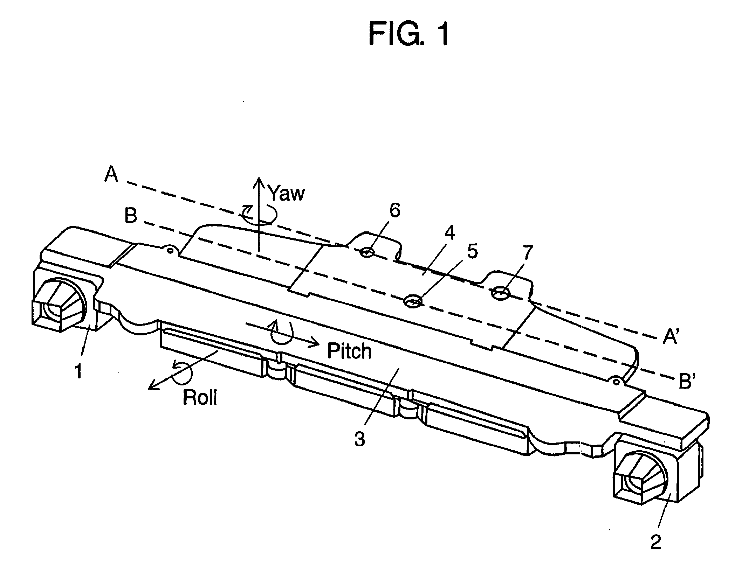

Fig 1 is a perspective view of the stereo camera according to the embodiment of the invention. In Fig. 1, the stereo camera of the invention comprises right camera 1, left camera 2, camera stay 3 for holding right camera 1 and left camera 2 at predetermined positions, and attachment portion 4 having openings for fixing camera stay 3 to a vehicle. The centers of openings 5, 6, and 7 are positioned on a plurality of virtual lines (in Fig. 1, two dotted lines AA' and BB') parallel to the base line connecting right camera 1 and left camera 2. A plural number of openings (two in Fig. 1) are arranged on the virtual parallel line AA' far away from camera stay 3 and one opening is arranged on the virtual parallel line BB' closer to camera stay 3 than the faraway virtual parallel line AA'.

Camera stay 3 is a rectangular plate, having attachment portion 4 protruding from the rear end surface in the middle portion. Camera stay 3 and attachment portion 4 are integrally formed by light, rigid, and good heat conductive aluminum base alloy.

This integral form realizes a stereo camera having an accuracy of attachment free from error at the assembling time compared with the case of forming camera stay 3 and attachment portion 4 separately. Use of good heat conductive aluminum base alloy contributes to save the weight of the stereo camera. It is effective in releasing heat from a photographing circuit board installed within camera stay 3, thereby realizing a reliable stereo camera.

Of the coordinate axes shown in Fig. 1, Pitch shows the rotation around the base line connecting right camera 1 and left camera 2. Roll shows the rotation of right camera 1 and left camera 2 in the direction of optical axis. Yaw shows the rotation around the direction vertical to the plain surface formed by the base line and the optical axes of right camera 1 and left camera 2.

Attachment portion 4 has openings 5, 6, and 7 for passing the screws.

The openings 6 and 7 are positioned at a predetermined space and opening 5 is positioned in the middle of opening 6 and opening 7 in the direction of the base line. Openings 5, 6, and 7 are arranged to form an isosceles triangle having two sides of equal length around the center of opening 5.

Fixing attachment portion 4 to camera stay 3 through this arrangement of the openings prevents from rotation in three directions; Pitch, Roll, and Yaw and deviation of the base length and the optical axis in the right and left cameras, thereby keeping measurement accuracy.

The centers of openings 5, 6, and 7 are positioned on the two virtual lines parallel to the base line connecting right camera 1 and left camera 2. The number of openings arranged on the virtual parallel line AA' far from camera stay 3 is two and the number of opening arranged on the virtual parallel line BB' closer to camera stay 3 than the faraway virtual parallel line AA' is one.

Even when the expansion coefficient owing to the heat outside vehicle is different between attached car body portion 11 and attachment portion 4, since there is only one opening 5 that is closer to camera stay 3, in this arrangement, attachment portion 4 is not restrained by the attachment pitch on the side of attached car body portion 11 nor affected by the thermal expansion on attached car body portion 11 described later. Since attachment portion 4 expands integrally with camera stay 3 and camera stay 3 is not deformed, there occurs no deviation of the base length and the optical axis in the right and left cameras and accuracy of distance measurement can be kept.

The center of opening 5 on the side of camera stay 3 in the direction of the camera base length is positioned in the middle of right camera 1 and left camera 2 on the camera base line. Since this arrangement can support right camera 1 and left camera 2 equally, it is possible to secure stability against vibration and impact at a running time.

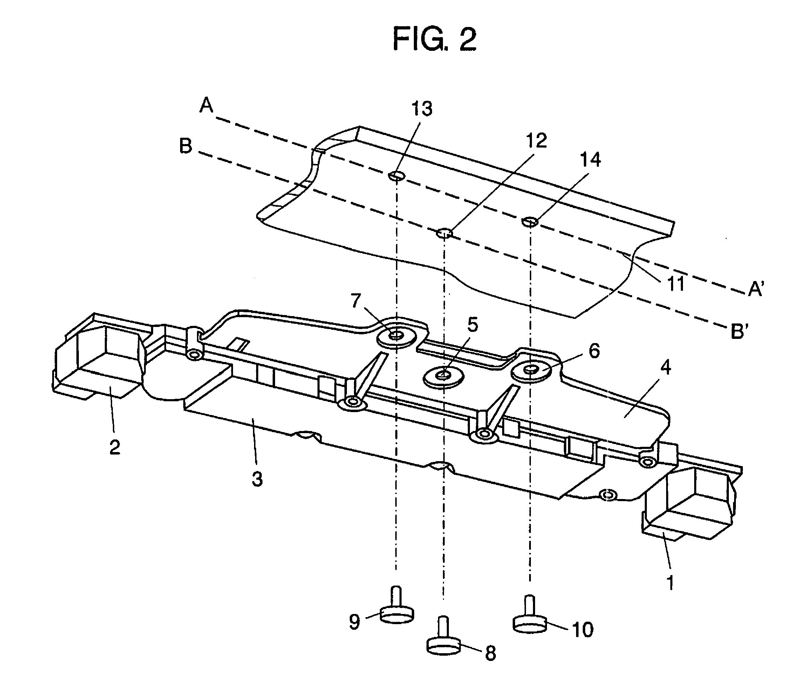

Fig. 2 is a view showing the state of attaching the stereo camera to a car body according to the embodiment of the invention. In Fig. 2, attached car body portion 11 has openings 12, 13, and 14 on the side of car body. The stereo camera is screwed up and fastened to attached car body portion 11 by three screws 8, 9, and 10 through openings 5, 6, and 7 provided on attachment portion 4.

The stereo camera mounted on a vehicle takes in the images of a preceding object through respective image pickup devices inside right camera 1 and left camera 2. An image processing substrate (not illustrated) installed inside camera stay 3 takes in the images at a predetermined timing through the two image pickup devices inside the right and left cameras and processes deviation of the images taken at the both sides, hence to calculate a distance to the preceding object.

Owing to this the stereo camera detects a distance between the preceding vehicle and itself and also detects a distance to a preceding obstacle. When the vehicle runs within reach of a predetermined distance, it issues a warning through sound or light to a driver.

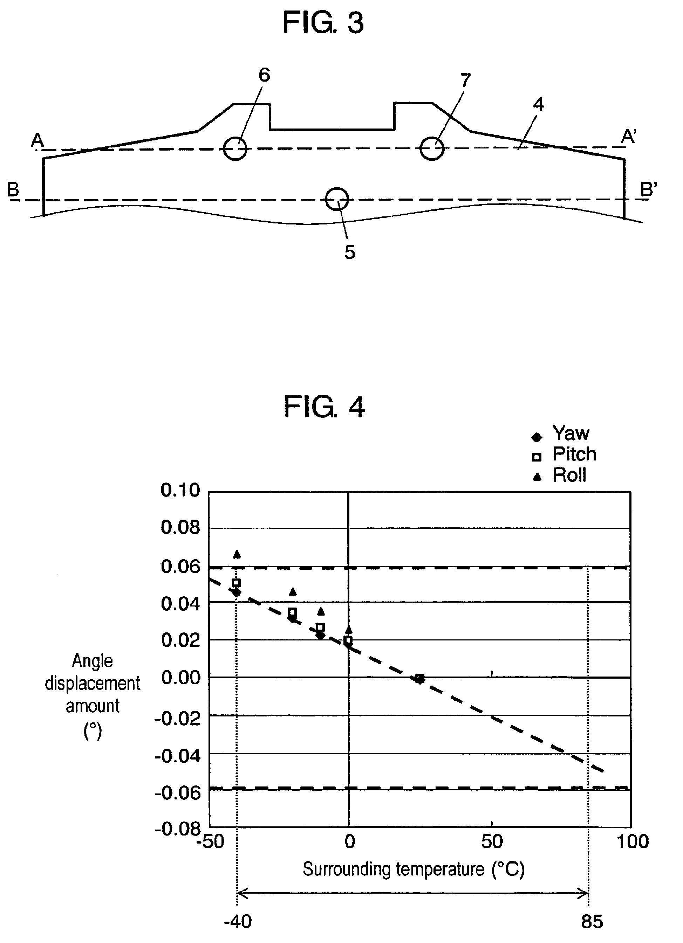

The result of an experiment using the stereo camera according to the embodiment of the invention and a stereo camera of a comparison example will be described using Fig. 3 to Fig. 6.

Fig. 3 is an arrangement view of opening 5 on attachment portion 4 of the stereo camera according to the embodiment of the invention for use in the experiment. Opening 5 is positioned near camera stay 3 and openings 6 and 7 are positioned far from camera stay 3. Openings 6 and 7 are positioned at an interval and opening 5 is positioned in the middle of openings 6 and 7 in the base line direction.

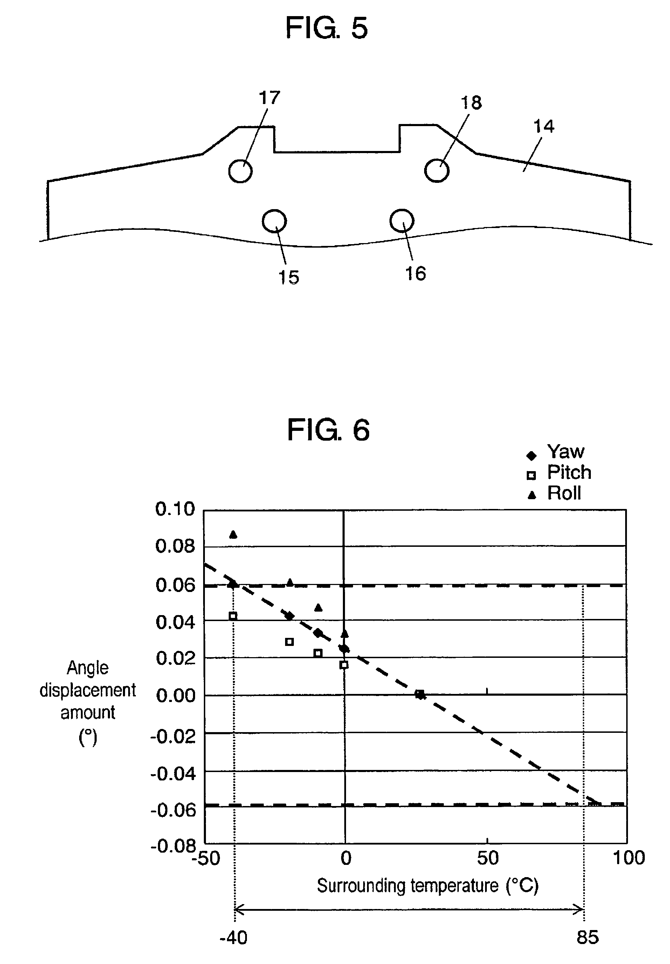

Fig. 5 is an arrangement view of openings 15 to 18 on attachment portion 14 of the stereo camera of the comparison example. The shape and size of attachment portion 14 is the same as that of attachment portion 4 according to the embodiment of the invention. Openings 17 and 18 are disposed at the same positions as openings 6 and 7 on attachment portion 4 according to the embodiment of the invention. The comparison example is different from attachment portion 4 according to the embodiment of the invention in that two openings 15 and 16 are positioned near the camera stay, but the other conditions are the same.

Fig. 4 is a view showing a relation between the surrounding temperature and the displacement amount of angle of the both cameras when the stereo camera according to the embodiment of the invention in Fig. 3 is attached to a vehicle. In Fig. 4, a horizontal axis indicates the surrounding temperature of the stereo camera. A vertical axis indicates the angle displacement amount in the directions of Yaw, Pitch, and Roll between right camera 1 and left camera 2 with the position of right camera 1 used as a reference point.

The same rotation of the both cameras with respect to the direction of the base line direction and the optical axis causes no deviation in the base line and the optical axis, in a relative positional relation. On the other hand, when the rotational direction is different between the both cameras and there occurs some angle displacement amount, there also occurs deviation in the base line and the optical axis, which deteriorates the accuracy of distance measurement. The angle displacement amount of the both cameras is used as a parameter to estimate distance measurement accuracy.

When the rotation especially in the Yaw direction, of the three directions: Yaw, Pitch, and Roll, is different between right camera 1 and left camera 2, there occurs a deviation in the optical axes of the both cameras facing a target for distance measurement. This deviation badly affects the deterioration in the distance measurement accuracy of the stereo camera.

The stereo camera according to the embodiment of the invention uses image pickup device 1 of 1/3 size and 40 hundred thousand pixels. One pixel pitch is 6.35 µm and in order to secure the distance measurement accuracy, it is necessary to suppress the deviation between the two images taken through the both cameras below 6.35 µm corresponding to the pitch for one pixel of image pickup device 1. Since the angle of view of the both cameras used for the stereo camera according to the embodiment of the invention is 43° and the length of acceptance surface of image pickup device 1 is 4.9 mm, the focal length of the lens is 6.2 mm. When the pitch for one pixel is converted into the angle in the Yaw direction, the pitch 6.35 µm is divided by the focal length of the lens 6.2 mm, to get 0.06°.

When the stereo camera is mounted on a vehicle, considering the use under a cold district and under the sunlight in summer, it is necessary to secure the distance measurement accuracy in the range of the surrounding temperature -40°C to 85°C. Therefore, the angle displacement amount in the Yaw direction has to be suppressed below 0.06° in the range of -40°C to 85°C as illustrated by the dotted line in Fig. 4.

Since the relation between the surrounding temperature and the angle displacement amount is set at 25°C as a reference, as illustrated in Fig. 4, the angle displacement amount at this time is adjusted to 0°. Together with decrease in the surrounding temperature, with right camera 1 as a reference point, left camera 2 changes in the direction of increasing the rotation angle shown by the arrow in the Yaw direction in Fig. 1 (the axis direction vertical to the plain surface formed by the base line and the optical axis of the stereo camera). On the contrary, when the surrounding temperature rises up, left camera 2 changes in the direction of increasing the rotation angle in the inverse direction to the arrow of the Yaw direction in Fig. 1, with right camera 1 as a reference point. The angle displacement amount of the both has a linear characteristic varying at a constant ratio according to the surrounding temperature.

When attachment portion 4 according to the embodiment of the invention is used to attach the stereo camera to a vehicle, the displacement amount of the rotation in the Yaw direction at the surrounding temperature -40°C is 0.0464° as shown in Fig. 4 and this becomes no problem practically. As mentioned above, the angle displacement amount has a linear relation with the surrounding temperature, varying at a constant ratio. Therefore, even at 85°C which is symmetric to 25°C in the temperature change, it is assumed that the angle displacement amount of Yaw in the both cameras is almost the same.

Fig. 6 is a view showing the relation between the surrounding temperature and the angle displacement amount of the both cameras in the case of attaching the stereo camera of the comparison example in Fig. 5 to a vehicle. The scale of the horizontal axis and the vertical axis in Fig. 6 is the same as that in Fig. 4.

When the conventional attachment portion is used to attach the stereo camera to a vehicle, the angle displacement amount between right camera 1 and left camera 2 in the Yaw direction at -40°C with the position of right camera 1 as a reference point is 0.0605°. This angle displacement amount is about 1.3 times as much as that in the case of attaching the stereo camera according to the embodiment of the invention to a vehicle, which decreases the measurement accuracy extremely.

According to the analysis of the above result, when the stereo camera of the embodiment of the invention is attached to a vehicle, even when the expansion coefficient due to the surrounding heat is different between attached car body portion 11 and attachment portion 4, since opening close to camera stay 3 is only one, attachment portion 4 is not restrained by the attachment pitch on the side of attached car body portion 11 nor affected by the thermal expansion of attached car body portion 11. Since attachment portion 4 and camera stay 3 expand integrally and camera stay 3 does not deform, the angle displacement amount of the both cameras can be suppressed.

On the other hand, when the stereo camera of the comparison example is attached to a vehicle, the expansion coefficient due to the surrounding heat is different between attached car body portion 11 and attachment portion 4, since openings close to camera stay 3 are two, attachment portion 4 is restrained by the attachment pitch on the side of attached car body portion 11 and affected by the thermal expansion of attached car body portion 11. Since camera stay 3 is separate, camera stay 3 deforms due to a difference of expansion between attachment portion 4 and camera stay 3, hence to increase the angle displacement amount of the both cameras.

As mentioned above, in the stereo camera according to the embodiment of the invention, the respective centers of openings are positioned at a plurality of virtual lines parallel to the base line connecting right camera and left camera, the number of openings arranged on the virtual parallel line AA' far from the camera stay is set at two, and the number of openings arranged on the virtual parallel line BB' close to the camera stay is set at one. Therefore, positional deviation between the two cameras can be suppressed and accurate distance measurement can be realized.

### INDUSTRIAL APPLICABILITY

The stereo camera according to the invention can prevent the camera stay from deforming due to a difference of expansion between the attachment portion and the camera stay and prevent from deviation in the base length and the optical axis of the both cameras, hence to keep the distance measurement accuracy. It is useful as a stereo camera for estimating a distance to a preceding object while processing an azimuth difference between the two images taken by the cameras on the both sides.

## Claims

1. A stereo camera comprising:
a right camera (1),
a left camera (2),
a camera stay (3) which holds the right camera (1) and the left camera (2) at predetermined positions, and
an attachment portion (4) having openings (5,6,7) for fixing the camera stay (3) to a vehicle, in which
respective centers of the openings (5,6,7) are positioned at a plurality of virtual lines (AA',BB') parallel to a base line connecting the right camera (1) and the left camera (2), **characterised in that**:
a plurality of the openings (6,7) are arranged on a virtual parallel line (AA') far from the camera stay (3), and
one opening (5) is arranged on a virtual parallel line (BB') closer to the camera stay (3) than the faraway virtual parallel line (AA').

2. The stereo camera of Claim 1, in which:
the number of the plurality of the openings is two, the two openings (6,7) form an isosceles triangle with the one opening (5), and the center of the one opening (5) is positioned at an apex of the isosceles triangle having two sides of equal length.

3. The stereo camera of Claim 1 or Claim 2, in which:
the center of the one opening (5) is positioned in the middle of the base length connecting the right camera (1) and the left camera (2).

4. The stereo camera of one of Claim 1 to Claim 3, in
which:
the camera stay (3) and the attachment portion (4) are integrally formed.

## Patentansprüche

1. Stereokamera, umfassend:
eine rechte Kamera (1),
eine linke Kamera (2),
eine Kamerastütze (3), die die rechte Kamera (1) und die linke Kamera (2) in vorgegebenen Positionen hält, und
einen Anbringungsabschnitt (4) mit Öffnungen (5, 6, 7) zum Befestigen der Kamerastütze (3) an einem Fahrzeug, wobei
jeweilige Mitten der Öffnungen (5, 6, 7) auf mehreren virtuellen Linien (AA', BB') parallel zu einer Grundlinie angeordnet sind, die die rechte Kamera (1) und die linke Kamera (2) verbindet, **dadurch gekennzeichnet, dass**:
mehrere der Öffnungen (6, 7) auf einer virtuellen Parallellinie (AA') entfernt von der Kamerastütze (3) angeordnet sind, und
eine Öffnung (5) auf einer virtuellen Parallellinie (BB') angeordnet ist, die näher an der Kamerastütze (3) als die entfernte virtuelle Parallellinie (AA') liegt.

2. Stereokamera nach Anspruch 2, wobei:
die Anzahl der mehreren Öffnungen zwei ist, die zwei Öffnungen (6, 7) ein gleichschenkliges Dreieck mit der einen Öffnung (5) ausbilden, und die Mitte der einen Öffnung (5) an einem Scheitel des gleichschenkligen Dreiecks mit zwei Seiten von gleicher Länge angeordnet ist.

3. Stereokamera nach Anspruch 1 oder 2, wobei:
die Mitte der einen Öffnung (5) in der Mitte der Grundlänge angeordnet ist, die die rechte Kamera (1) und die linke Kamera (2) verbindet.

4. Stereokamera nach einem der Ansprüche 1 bis 3, wobei:
die Kamerastütze (3) und der Anbringungsabschnitt (4) einstückig ausgebildet sind.

## Revendications

1. Caméra stéréoscopique comprenant :
une caméra droite (1) ;
une caméra gauche (2) ;
un support de caméras (3) qui maintient la caméra droite (1) et la caméra gauche (2) dans des positions prédéterminées, et
une partie de fixation (4) ayant des ouvertures (5, 6, 7) pour fixer le support de caméras (3) à un véhicule, dans laquelle
des centres respectifs des ouvertures (5, 6, 7) sont positionnés au niveau d'une pluralité de lignes virtuelles (AA', BB') parallèles à une ligne de base reliant la caméra droite (1) et la caméra gauche (2), **caractérisée en ce que**
une pluralité d'ouvertures (6, 7) sont agencées sur une ligne parallèle virtuelle (AA') loin du support de caméra (3), et
une ouverture (5) est agencée sur une ligne parallèle virtuelle (BB') plus proche du support de caméra (3) que la ligne parallèle virtuelle (AA') éloignée.

2. Caméra stéréoscopique de la revendication 1, dans laquelle :
la pluralité d'ouvertures sont au nombre de deux, les deux ouvertures (6, 7) forment un triangle isocèle avec une ouverture (5), et le centre de l'ouverture (5) est positionné à un sommet du triangle isocèle ayant deux côtés d'égale longueur.

3. Caméra stéréoscopique de la revendication 1 ou 2, dans laquelle :
le centre de l'ouverture (5) est positionné au milieu de la longueur de base reliant la caméra droite (1) et la caméra gauche (2).

4. Caméra stéréoscopique de l'une des revendications 1 à 3, dans laquelle :
le support de caméras (3) et la partie de fixation (4) sont formés en un seul bloc.
